# EUROPEAN PATENT APPLICATION

(11) **EP 2 388 964 A1**
(43) Date of publication of application: **23.11.2011**
(21) Application number: 10758060.7
(22) Date of filing: 01.04.2010
(51) Int. Cl.: H04L 12/56

(54) **METHOD AND DEVICE FOR TRANSMITTING AND RECEIVING SERVICE DATA**

(30) Priority: 01.04.2009 CN 200910131493
(71) Applicant: Huawei Technologies Co., Ltd., Longgang District, Shenzhen Guangdong 518129 (CN)
(72) Inventor: LI, Kun, Shenzhen Guangdong 518129 (CN); ZHOU, Jianlin, Shenzhen Guangdong 518129 (CN); CAO, Yang, Shenzhen Guangdong 518129 (CN); HU, Xing, Shenzhen Guangdong 518129 (CN); CAI, Jun, Shenzhen Guangdong 518129 (CN); XIAO, Xinhua, Shenzhen Guangdong 518129 (CN)
(74) Representative: Charles, Glyndwr
(86) International application number: PCT/CN2010/071490
(87) International publication number: WO 2010/111958

(57) **Abstract**

In the field of communications technologies, a method and device for sending and receiving service data provided by embodiments of the present invention may be capable of solving the problem that a network system cannot bear a service of arbitrary rate. The method for sending service data includes: receiving at least one flexible data channel to which service data is adapted; searching for an address of a destination port corresponding to a source port of the at least one flexible data channel; scheduling the at least one flexible data channel to an Optical Channel Data Unit-k (ODUk) frame in the corresponding destination port respectively according to channel indication information corresponding to the at least one flexible data channel; and forwarding the ODUk frame to the destination address through an Optical Transport Network (OTN) line after completing construction of the ODUk frame. The embodiments of the present invention are applicable to optical network communications.

## Description

This application claims priority to Chinese Patent Application No. 200910131493.1, filed with the Chinese Patent Office on April 1, 2009 and entitled "METHOD AND DEVICE FOR SENDING AND RECEIVING SERVICE DATA", which is incorporated herein by reference in its entirety.

### FIELD OF THE INVENTION

The present invention relates to the field of communications technologies, and in particular, to a method and device for sending and receiving service data.

### BACKGROUND OF THE INVENTION

An Optical Transport Network (OTN) includes technical specifications in an electrical layer and an optical layer, has rich Operation Administration and Maintenance (OAM), and a strong Tandem Connection Monitoring (TCM) capability and an out-of-band Forward Error Correction (FEC) capability, and can implement flexible scheduling and management of a service with high capacity.The OTN is a technology of networking, scheduling, and sending on the basis of a large granularity bandwidth. An OTN system has the following characteristics: (1) The OTN system can transparently send multiple types of service data; (2) the OTN system provides large granularity bandwidth multiplexing and cross-configuration; (3) the OTN system provides perfect performance and failure detection capability; (4) the OTN system provides the out-of-band FEC capable of bringing a coding gain of at most 6.2 dB (Bit Error Rate (BER) = 10⁻¹⁵); (5) the OTN system provides a stronger networking and protection capability than Wavelength Division Multiplexing (WDM); and (6) the OTN system has poor capability of supporting a small bandwidth service, and in the OTN, a minimum granularity of an Optical Channel Data Unit-k (ODUk) is ODU0, and a minimum granularity of a corresponding Optical Channel Payload Unit-k (OPUk) is OPU0.

Rates corresponding to OPU0, OPU1, OPU2, and OPU3 defined in G709 are 1.238954 Gbits/Sec, 2.488320 Gbits/Sec, 9.953280 Gbits/Se, and 39.813120 Gbits/Sec respectively. Currently, services with client signal rates lower than 1.25 Gbits/Sec exist in large quantities and will last for a long time. With the in-depth application of the OTN, in one aspect, the OTN is expanded to a rate of 100 Gbits/Sec or higher; in the other aspect, the OTN extends to the field of a rate lower than 1.25 Gbits/Sec, and directly bears a low rate service to reduce the investment and operation and maintenance cost.

The OPUk is divided into multiple fixed sub-channels according to an agreement or a certain protocol in order to bear services of different bandwidths. For example, OPU1 may be divided into 32 slots, each slot having 119 columns to form a channel with a rate of 77.76 Mbit/S. If a rate of a service data is lower than the rate of 77.76 Mbit/S, the service data is filled until the rate of the service data is equal to the rate of 77.76 Mbit/S; if a rate of a service data is higher than the rate of 77.76 Mbit/S, multiple channels are bound to provide a bandwidth which is an integral multiple of the rate of the service data.

The method in the prior art has the following problems: The sub-channel bandwidth is fixed and must be the integral multiple of 77.76 Mbit/Sec; for smaller granularity scheduling (for example, 2 Mbit/Sec), bandwidth may be wasted or scheduling may be difficult; and the operation of changing the channel bandwidth is complex, which cannot adapt to a flexible and rapid bandwidth adjustment capability required by future data services, and cannot adapt to future services of unknown rates either.

### SUMMARY OF THE INVENTION

Embodiments of the present invention provide a method and device for sending and receiving service data, so as to solve the problem that a network system cannot bear a service of arbitrary rate.

The embodiments of the present invention employ the following technical solutions.

A method for sending service data according to an embodiment of the present invention includes:
receiving at least one flexible data channel to which service data is adapted;
scheduling the at least one flexible data channel to an ODUk frame in a corresponding destination port respectively according to scheduling control information corresponding to the at least one flexible data channel; and
sending the ODUk frame to a destination address through an OTN line after completing construction of the ODUk frame.

A method for receiving service data according to an embodiment of the present invention includes:
receiving an ODUk frame that includes at least one flexible data channel;
scheduling the at least one flexible data channel to a corresponding destination port according to scheduling control information corresponding to the at least one flexible data channel; and
recovering service data in the at least one flexible data channel from the destination port.

A data apparatus according to an embodiment of the present invention includes:
a receiving unit, configured to receive at least one flexible data channel to which service data is adapted;
a scheduling unit, configured to schedule the at least one flexible data channel to an ODUk frame in a corresponding destination port respectively according to scheduling control information corresponding to the at least one flexible data channel; and
a sending unit, configured to send the ODUk frame to a destination address through an OTN line after completing construction of the ODUk frame.

Another data apparatus according to an embodiment of the present invention includes:
a receiving unit, configured to receive an ODUk frame that includes at least one flexible data channel;
a scheduling unit, configured to schedule the at least one flexible data channel to a corresponding destination port according to scheduling control information corresponding to the at least one flexible data channel; and
a recovery unit, configured to recover service data in the at least one flexible data channel from the destination port.

Through the method and device for sending and receiving the service data according to the embodiments of the present invention, the sending end can schedule each flexible data channel to the ODUk frame in the corresponding destination port according to the scheduling control information corresponding to each flexible data channel, and the receiving end can schedule each flexible data channel to the corresponding destination port according to the scheduling control information corresponding to the flexible data channel, so as to recover the service data in the flexible data channel. Since a bandwidth of the flexible data channel is variable, bearing at any rate is implemented, and a flexible and rapid bandwidth adjustment capability is provided.

### BRIEF DESCRIPTION OF THE DRAWINGS

To illustrate the technical solutions according to the embodiments of the present invention or in the prior art more clearly, the accompanying drawings are described briefly below for the embodiments or the prior art. Apparently, the accompanying drawings in the following description are only some embodiments of the present invention, and persons of ordinary skill in the art can derive other drawings from the accompanying drawings without creative efforts.
FIG. 1 is a flow chart of a method for sending service data according to Embodiment 1 of the present invention.
FIG. 2 is a flow chart of a method for receiving service data according to Embodiment 2 of the present invention.
FIG. 3 is a flow chart of a method for sending service data according to Embodiment 3 of the present invention.
FIG. 4 is a schematic diagram of scheduling a flexible data channel according to Embodiment 3 of the present invention.
FIG. 5 is a schematic diagram of an OPU1 according to Embodiment 3 of the present invention.
FIG. 6 is a schematic diagram of implementation of Embodiment 3 of the present invention in an OTU1 frame.
FIG. 7 is a schematic diagram of scheduling a flexible data channel according to Embodiment 4 of the present invention.
FIG. 8 is a schematic diagram of implementation of Embodiment 5 of the present invention in an OTU1 frame.
FIG. 9 is a schematic diagram of implementation of Embodiment 6 of the present invention in an OTU1 frame.
FIG. 10 is a schematic diagram of a data apparatus according to an embodiment of the present invention.
FIG. 11 is a schematic diagram of a scheduling unit in the embodiment shown in FIG. 10.
FIG. 12 is a schematic diagram of another data apparatus according to an embodiment of the present invention.

### DETAILED DESCRIPTION OF THE EMBODIMENTS

A method and device for sending service data according to embodiments of the present invention are described in detail in the following with reference to the accompanying drawings.

It should be understood that the described embodiments are only part rather than all of the embodiments of the present invention. On the basis of the embodiments of the present invention, other embodiments derived by persons of ordinary skill in the art without creative efforts should fall within the protection scope of the present invention.

### Embodiment 1

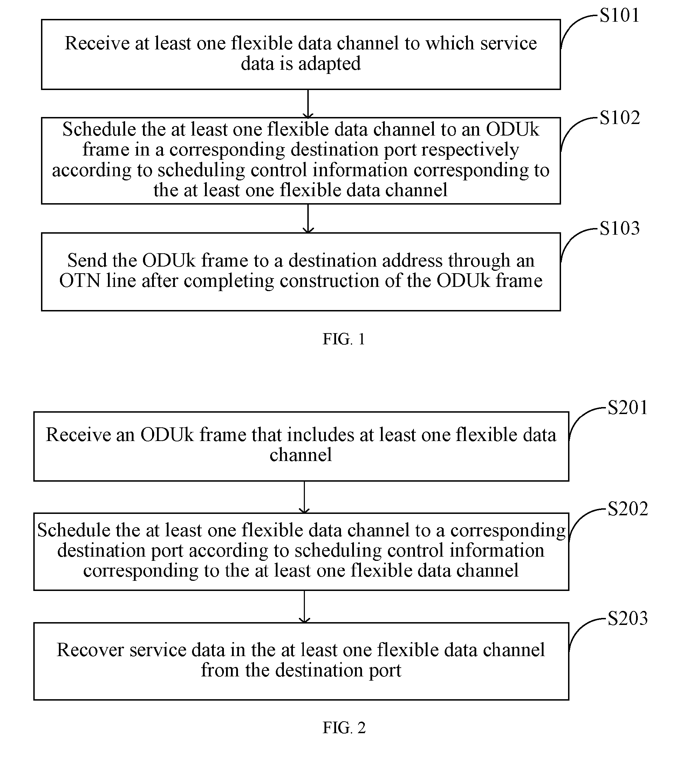

As shown in FIG. 1, a method for sending service data according to this embodiment may include the following steps.

S101: Receive at least one flexible data channel to which service data is adapted.

The service data may enter the flexible data channel after being encapsulated, and may be encapsulated by Gigabit Passive Optical Network (GPON), Generic Framing Procedure-Transparent (GFP-T), Generic Framing Procedure-Framing (GFP-F), Generic Mapping Procedure (GMP), High-Level Data Link Control (HDLC), or other self-defined methods. The service data may also be transparently transmitted directly. The service data may be Synchronous Transmission Module level n (STM-N), Optical Channel Transport Unit k (OTUk), Fiber Channel (FC), or any client-defined data stream.

The flexible data channel is a physical carrier for bearing the service data, and may transmit the service data only or transmit the service data and a flexible data channel overhead at the same time.

S102: Schedule the at least one flexible data channel to an ODUk frame in a corresponding destination port respectively according to scheduling control information corresponding to the at least one flexible data channel.

The scheduling control information may be carried in an ODUk data frame or may be statically configured on a data apparatus used for performing a scheduling operation.

S103: Send the ODUk frame to a destination address through an OTN line after completing construction of the ODUk frame.

Through the method for sending the service data according to the embodiment of the present invention, each flexible data channel can be scheduled to the ODUk frame in the corresponding destination port according to the scheduling control information corresponding to each flexible data channel, so that the receiving end can schedule each flexible data channel to the corresponding destination port according to the scheduling control information corresponding to the flexible data channel, and recover the service data in the flexible data channel. Since a bandwidth of the flexible data channel is variable, bearing at any rate is implemented, and a flexible and rapid bandwidth adjustment capability is provided.

### Embodiment 2

As shown in FIG. 2, a method for receiving service data according to this embodiment may include the following steps.

S201: Receive an ODUk frame that includes at least one flexible data channel.

S202: Schedule the at least one flexible data channel to a corresponding destination port according to scheduling control information corresponding to the at least one flexible data channel.

S203: Recover service data in the at least one flexible data channel from the destination port.

Through the method for receiving the service data according to the embodiment of the present invention, the receiving end can schedule each flexible data channel to the corresponding destination port according to the scheduling control information corresponding to the flexible data channel, so as to recover the service data in the flexible data channel. Since a bandwidth of the flexible data channel is variable, bearing at any rate is implemented, and a flexible and rapid bandwidth adjustment capability is provided.

The embodiments of the present invention are described in detail in the following by taking service data transmission based on an OTN as an example.

### Embodiment 3

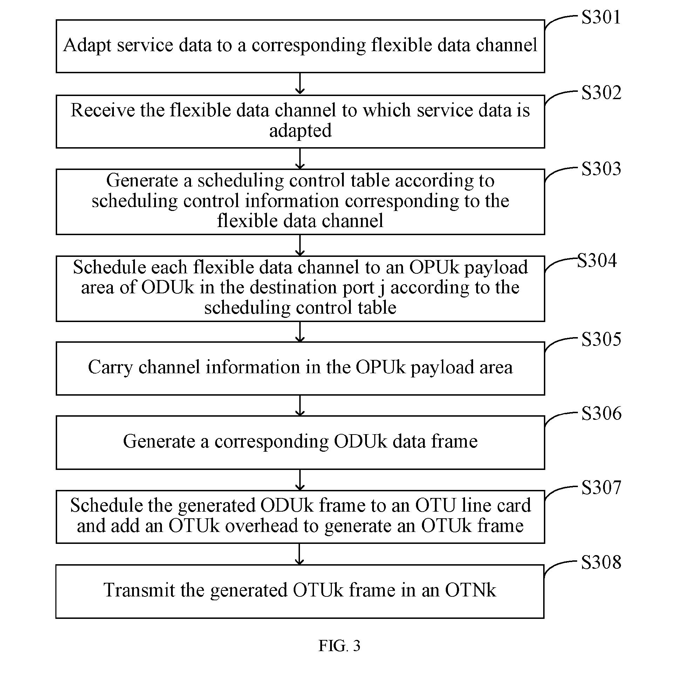

FIG. 3 is a flow chart of a method for sending service data according to this embodiment. The method may include the following steps.

S301: Adapt service data to a corresponding flexible data channel.

In the embodiment of the present invention, a location and a bandwidth of each flexible data channel may be determined according to requirements, for example, a rate requirement and/or a bandwidth allocation policy of the service data. The size of each flexible data channel may be adjusted according to actual requirements. For example, the channels may be divided with the same bandwidth or different bandwidths.

Generally, at least one flexible data channel exists. Since the bandwidths of the flexible data channels may be inconsistent, the service data with different rate and different bandwidth requirements may be adapted to appropriate flexible data channels according to actual situations.

When the service data is adapted to each flexible data channel, a channel overhead may be added in each flexible data channel. For example, channel management information relevant to the service data may be added in each flexible data channel, or information, such as error or check, of the service data obtained after the service data is detected may be added in each flexible data channel.

After the service data is adapted to each flexible data channel, the service data in each flexible data channel may be encapsulated, for example, by GPON, GFP-T, GFP-F, GMP, HDLC, or other self-defined methods. Alternatively, the service data in each flexible data channel may be transparently transmitted directly without being encapsulated.

S302: Receive the flexible data channel to which the service data is adapted.

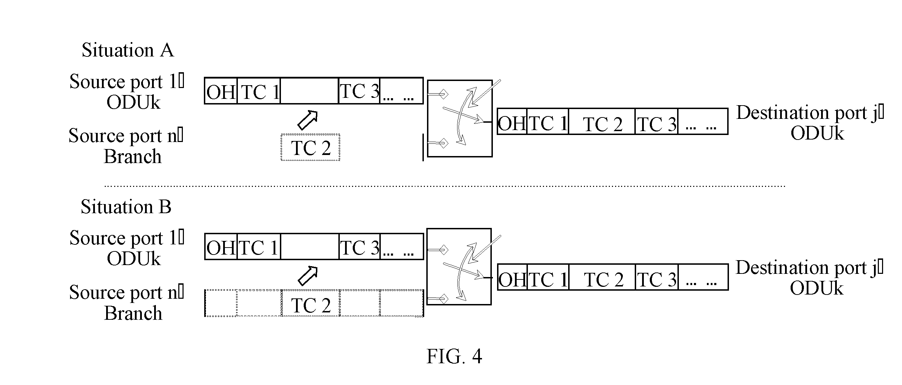

The received flexible data channels may be directly sent through a branch or may be sent through an ODUk virtual frame in the branch. As shown in FIG. 4, TC 1, TC2, and TC3 represent a flexible data channel 1, a flexible data channel 2, and a flexible data channel 3 respectively. In Situation A, the flexible data channel TC2 is directly sent through a branch of Port n, while in Situation B, the ODUk virtual frame is sent through a branch of Port n. The ODUk virtual frame includes TC2 only without other frame information, and a frame header of the virtual frame needs to be aligned with the ODUk frame in Port 1.

The ODUk frame sent in Port 1 includes TC1 and TC3. In this embodiment, the flexible data channel TC2 needs to be sent to the ODUk frame sent in Port 1.

S303: Generate a scheduling control table according to scheduling control information corresponding to the flexible data channel.

The scheduling control information may include port information and channel information. The port information includes a source port corresponding to the flexible data channel and a destination port corresponding to the source port. The channel information includes a channel definition field in the source port corresponding to the flexible data channel and a channel definition field in the corresponding destination port. The channel definition field includes a channel start time and a channel length, or a channel start time and a channel end time. The channel start time and the channel length or the channel start time and the channel end time can define a location of the corresponding flexible data channel in the ODUk frame. The channel information may further include an identifier (ID) of each flexible data channel.

The scheduling control information of the flexible data channel may be statically configured on a data apparatus used for performing scheduling control, or may be carried in the ODUk frame sent in Port 1. Moreover, the port information or channel information may be allocated and carried in the ODUk frame sent in Port 1, or may be statically configured on the data apparatus used for performing scheduling control. If the scheduling control information is carried in the ODUk frame, a main node selected in a network may configure the scheduling control information, and other nodes only need to select scheduling control information belonging to them from the scheduling control information carried in the ODUk frame, so as to control the scheduling of the flexible data channel.

The scheduling control table generated according to the scheduling control information is shown in Table 1. Herein, the flexible data channel is defined by the channel start time and the channel end time.

**Table 1. Scheduling Control Table in Embodiment 1**

| Destination Port | Flexible Data Channel ID | Channel Start Time of Destination Port | Channel End Time of Destination Port | Source Port | Channel Start Time of Source Port | Channel End Time of Source Port | Storage Location | Frame Count |
|---|---|---|---|---|---|---|---|---|
| j | TC1 | s1 | s2 | 1 | s3 | s4 | | |
| j | TC2 | s5 | s6 | n | S7 | S8 | | |
| j | TC3 | s9 | s10 | 1 | s11 | s12 | | |

Referring to FIG. 4, it can be seen from the scheduling control table that, TC1 in the source port 1 needs to be scheduled to a channel defined by s1-s2 in the destination port j, TC2 in the source port n needs to be scheduled to a channel defined by s5-s6 in the destination port j, and TC3 in the source port 1 needs to be scheduled to a channel defined by s9-s10 in the destination port j. To schedule the flexible data channel, it is required that a length between the channel start time and the channel end time of the flexible data channel in the source port should be less than or equal to a length between the channel start time and the channel end time of the flexible data channel in the destination port.

The scheduling control table may further include two fields, that is, storage location and frame count. For example, the storage location may be an OPUk payload area, and the frame count is the number of sent frames. Moreover, the channel information may further include a channel quantity indication field and other check information. The channel quantity indication field is used to represent the total number of the flexible data channels and may also be used to check the channel information.

S304: Schedule each flexible data channel to an OPUk payload area of ODUk in the destination port j according to the scheduling control table.

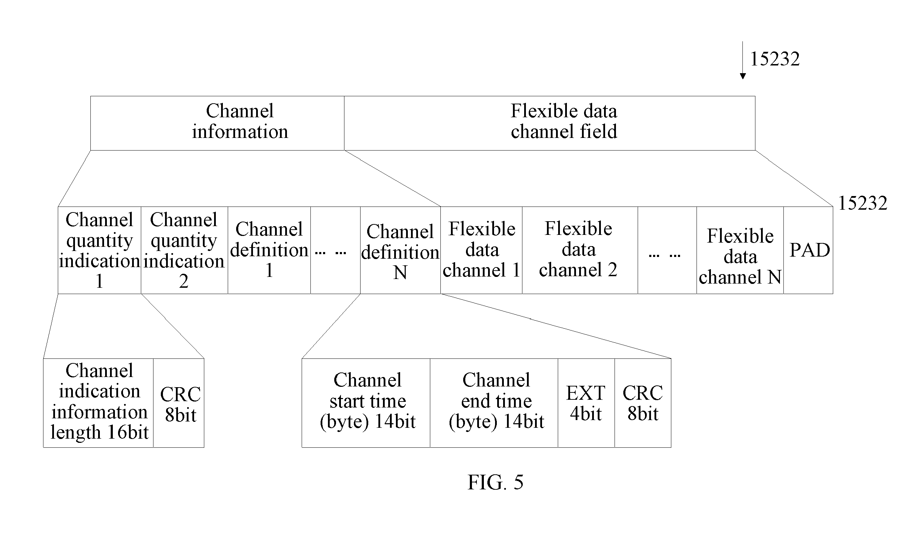

In this embodiment, an OPU1 with a rate of 2.48832 Gbits/Sec may be adopted. In this manner, an overhead of the OPU1 is reserved and not used. FIG. 5 is a schematic diagram of the OPU1 in this embodiment. According to the definition of G709, an OPU1 payload is a structure of 4 x 3808 columns, and the 4 x 3808 bytes are equivalent to 4 x 3808 = 1 x 15232 bytes.

S305: Carry the channel information in the OPUk payload area.

The channel information may include the channel quantity indication field and the channel definition field. As shown in FIG. 5, the channel quantity indication field includes a channel quantity indication 1 and a channel quantity indication 2. When the channel quantity indication 1 is incorrect, the channel quantity indication 2 can indicate the number of the flexible data channels.

As shown in FIG. 5, the channel definition field includes the channel start time, the channel end time, Cyclical Redundancy Check (CRC), and Extend (EXT). Definitely, the channel definition field may further include the channel start time and a channel length. The channel start time field and the channel length field may define one flexible data channel. Moreover, the channel definition field may not include the CRC and EXT information.

Definitely, the channel information may also be reserved in a scheduling apparatus as statically configured information, or the port information may also be carried in the ODUk frame to send. The sequence of S305 and S304 is not limited to the foregoing sequence, and S305 and S304 may be performed simultaneously.

S306: Generate a corresponding ODUk data frame.

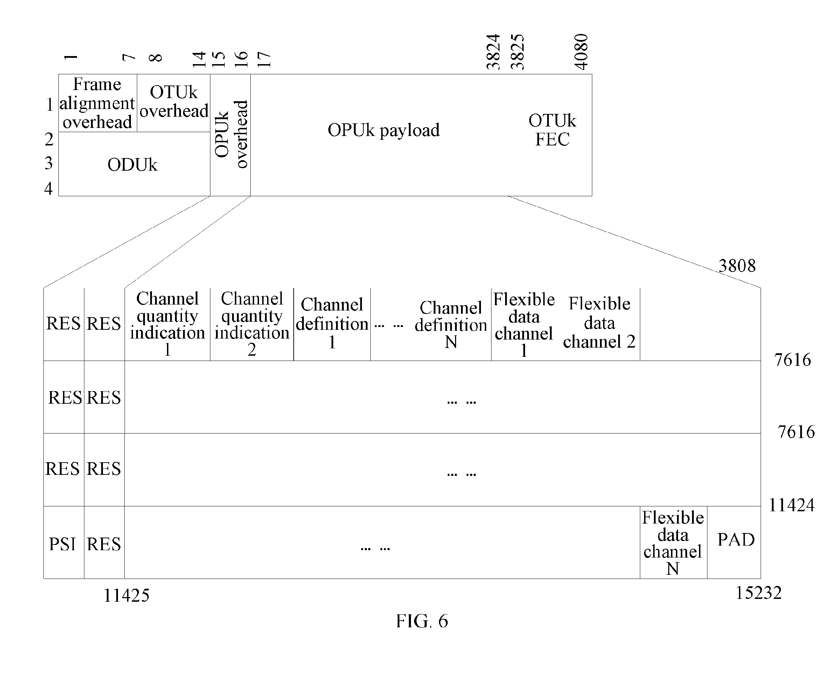

FIG. 6 is a schematic diagram of implementation of the embodiment of the present invention in an OTU1 frame. A channel quantity indication field and a channel definition field are located in the OPU1 payload. In order to distinguish the OPU1 payload from an existing OPU1 payload, a new Payload Structure Identifier (PSI) needs to be defined to indicate that the OPUk is a flexible data channel.

In order to be compatible with a transmission structure of the ODU1, necessary format conversion further needs to be performed on the service data, and spare OPU1 payload needs to be filled, so as to generate an ODUI data frame.

S307: Schedule the generated ODUk frame to an OTU line card and add an OTUk overhead, so as to generate an OTUk frame.

S308: Transmit the generated OTUk frame in an OTN.

In this embodiment, the channel information is transmitted through the OPU1 payload, the length of the channel information is variable, and correctness of the channel information can be ensured by methods such as repeated transmission and check. After receiving the data frame, a receiving end may directly obtain complete channel information from the OPU1 payload at one time, so as to generate the corresponding scheduling control table according to the channel information and the port information, schedule each flexible data channel to a destination port, and recover the service data in each flexible data channel. Moreover, the receiving end may also reschedule the flexible data channel in the received ODUk frame and forward the ODUk frame to other destinations. It can be seen from FIG. 4 that, if Port j on the right side is used as the source port, and Port 1 and Port n on the left side are used as the destination port, the flexible data channels may be scheduled to Port 1 and Port n, and the service data in the flexible data channels can be recovered from the corresponding ports according to the foregoing method.

In the implementation of the embodiment of the present invention, if a certain flexible data channel has an error in the process of sending the service data, the corresponding flexible data channel is filled with an ID, so as to prevent the error from propagating, and facilitate apparatus detection and alarm processing at a receiving end.

In this embodiment, multiple flexible data channels and corresponding channel information and/or port information are carried in the OPUk payload, and all the channel information and/or port information can be transmitted through the OPUk frame, so that bearing at any rate in the OTN is implemented, and a flexible and rapid bandwidth adjustment capability is provided. The method is suitable for rapid rate adjustment of the flexible data channel, and may ensure that an adjustment rate is consistent with a frequency of an OTU frame.

Moreover, in the embodiment of the present invention, the flexible data channel in the OPUk can bear an OTUn frame of a lower rate, where n<k. For example, the flexible data channel in an OPU3 can bear an OTU1 frame or an OTU2 frame. Therefore, in the embodiment of the present invention, a small bandwidth service or a bandwidth of any rate can be borne.

### Embodiment 4

Different from Embodiment 3, in this embodiment, flexible data channels are scheduled in different ODUk frames.

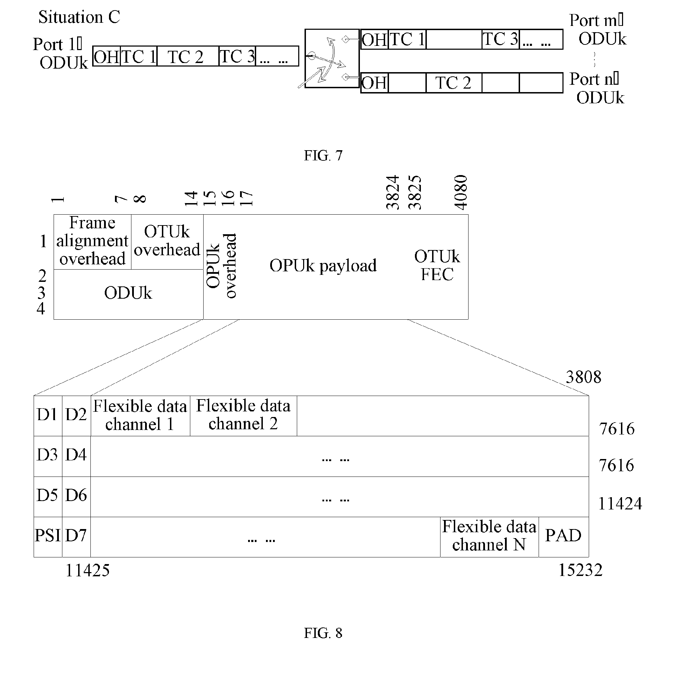

As shown in FIG. 7, an ODUk frame sent by a source port 1 includes multiple flexible data channels, for example, TC1, TC2, and TC3. TC1 and TC3 need to be scheduled to an ODUk in a destination port m, and TC2 needs to be scheduled to an ODUk in a destination port n.

A scheduling control table 2 may be generated according to scheduling control information configured statically or scheduling control information carried in the ODUk frame sent by the source port 1.

**Table 2 Scheduling Control Table in Embodiment 2**

| Destination Port | Flexible Data Channel ID | Channel Start Time of Destination Port | Channel End Time of Destination Port | Source Port | Channel Start Time of Source Port | Channel End Time of Source Port | Storage Location | Frame Count |
|---|---|---|---|---|---|---|---|---|
| M | TC1 | s1' | s2' | 1 | s3' | s4' | | |
| N | TC2 | s5' | s6' | 1 | S7' | S8' | | |
| M | TC3 | s9' | s10' | 1 | s11' | s12' | | |

Each flexible data channel can be scheduled to an OPUk payload in a corresponding destination port according to Table 2. For other steps of sending service data, reference may be made to Embodiment 1.

Moreover, in FIG. 7, Port m and Port n on the right side may also be used as the source ports, and Port 1 on the left side may also be used as the destination port. Through the method according to the embodiment of the present invention, the flexible data channels in Port m and Port n may also be scheduled to the ODUk frame in Port 1.

In this embodiment, a small bandwidth service or a bandwidth of any rate may be borne through the multiple flexible data channels in the ODUk frame.

### Embodiment 5

Different from Embodiment 1, in this embodiment, a signaling channel is established in an OPUk overhead to transmit scheduling control information, and specifically, to transmit channel information and/or port information.

FIG. 8 is a schematic diagram of implementation of this embodiment in an OTU1 frame. It can be seen from FIG. 8 that, the channel information and/or the port information may be transmitted through signaling channels such as D1, D2... D7 in the OPUk overhead.

The channel information and/or the port information is transmitted after being encapsulated by, for example, HDLC or GFP. A receiving end may perform decapsulation and obtain complete channel information and/or port information.

In this embodiment, correctness of the channel information and/or the port information is ensured through the signaling channel, and in the method of this embodiment, an OPUk payload bandwidth is not occupied, thereby increasing a utilization rate of bandwidths.

The present invention is not limited to this embodiment, and the channel information and/or the port information may also be transmitted directly through more than one OPUk sub-frame in the OPUk overhead. In this method, the OPUk payload bandwidth is not occupied, and the channel information and/or the port information does not need to be encapsulated and decapsulated, so the process is simple.

### Embodiment 6

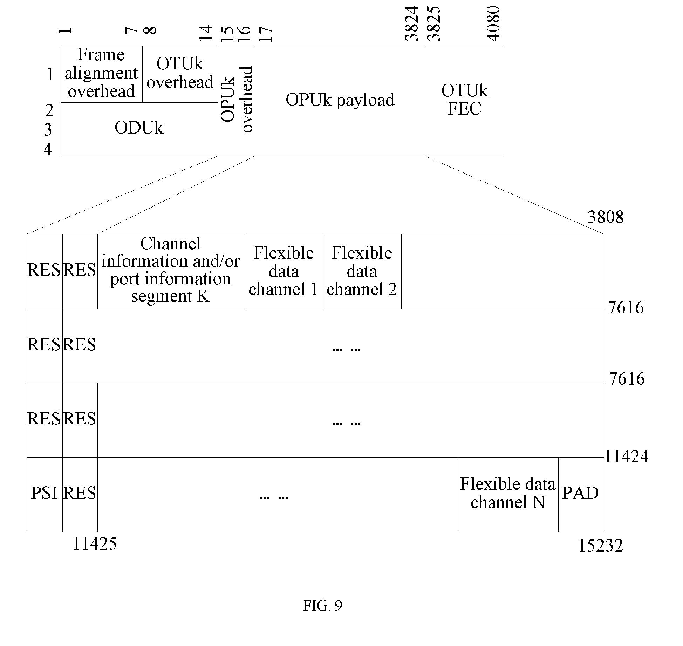

For the solution of this embodiment, reference may be made to FIG. 9. Complete channel information and/or port information may be divided into multiple segments, placed in an OPUk payload, and transmitted segment by segment. The segment in an OTUk frame may be identified by a frame alignment field in an OTUk frame alignment overhead. A receiving end may determine which segment of the channel information and/or the port information is received according to the frame alignment field and recover the complete channel information and/or port information.

Through the method of this embodiment, a bandwidth occupation rate of the channel information and/or the port information in the OPUk payload may be reduced, and a bandwidth adjustment rate may be increased.

Moreover, in the embodiment of the present invention, the channel information and/or the port information may also be encapsulated by, for example, HDLC or GFP in a Generic Communication Channel (GCC) of an OTUk overhead and then transmitted. The receiving end may recover the complete channel information and/or port information after receiving a data frame, generate a scheduling control table according to the channel information and/or the port information, and schedule flexible data channels in each port, so as to obtain service data in the corresponding flexible data channel.

The method for sending and receiving the service data according to the embodiments of the present invention can be used not only in an OTN system but also in other systems with an M x N block frame structure, such as Synchronous Digital Hierarchy/MultiService Transport Platform/Synchronous Optical Network (SDH/MSTP/SONET). For the methods for dividing the flexible data channel and generating, sending or receiving the service data, reference may be made to the foregoing embodiments.

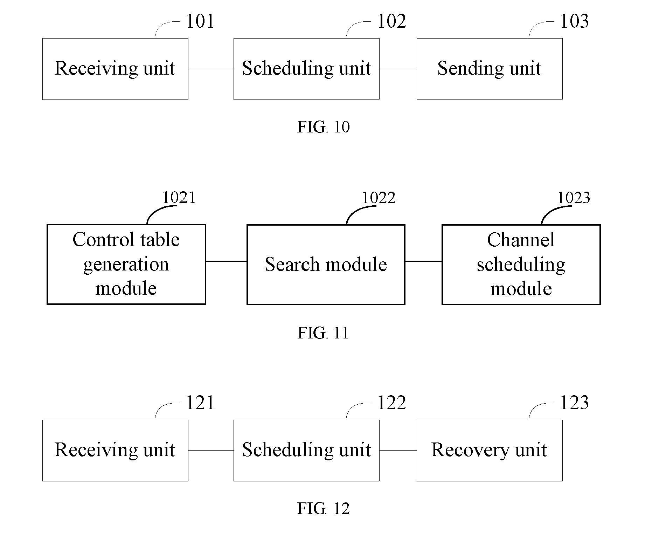

As shown in FIG. 10, an embodiment of the present invention further provides a data apparatus. The data apparatus includes:
a receiving unit 101, configured to receive at least one flexible data channel to which service data is adapted;
a scheduling unit 102, configured to schedule the at least one flexible data channel to an ODUk frame in a corresponding destination port respectively according to scheduling control information corresponding to the at least one flexible data channel; and
a sending unit 103, configured to send the ODUk frame to a destination address through an OTN line after completing construction of the ODUk frame.

On the basis of the foregoing solution, as shown in FIG. 11, the scheduling unit 102 may include a control table generation module 1021, a search module 1022, and a channel scheduling module 1023.

The control table generation module 1021 is configured to generate a scheduling control table according to the scheduling control information corresponding to the at least one the flexible data channel.

The search module 1022 is configured to search for the destination port corresponding to the at least one flexible data channel and search for a channel definition field in the corresponding destination port from the scheduling control table generated by the control table generation module 1021.

The channel scheduling module 1023 is configured to schedule the at least one flexible data channel to the corresponding destination port respectively according to information found by the search module 1022.

As shown in FIG. 12, an embodiment of the present invention further provides another data apparatus. The data apparatus includes:
a receiving unit 121, configured to receive an ODUk frame that includes at least one flexible data channel;
a scheduling unit 122, configured to schedule the at least one flexible data channel to a corresponding destination port according to scheduling control information corresponding to the at least one flexible data channel; and
a recovery unit 123, configured to recover service data in the at least one flexible data channel from the destination port.

On the basis of the foregoing solution, the scheduling unit 122 may include a control table generation module, a search module, and a channel scheduling module. For a schematic structural diagram of the scheduling unit 122, reference may be made to the schematic structural diagram of the scheduling unit 102 shown in FIG. 11.

The control table generation module is configured to generate a scheduling control table according to the scheduling control information corresponding to the at least one the flexible data channel.

The search module is configured to search for the destination port corresponding to the at least one flexible data channel and search for a channel definition field in the corresponding destination port from the scheduling control table generated by the control table generation module.

The channel scheduling module is configured to schedule the at least one flexible data channel to the corresponding destination port respectively according to information found by the search module.

For the data apparatuses in the foregoing embodiments, the scheduling control information includes port information and channel information. The port information includes a source port corresponding to the at least one flexible data channel and a destination port corresponding to the source port. The channel information includes a channel definition field in the source port corresponding to the at least one flexible data channel and a channel definition field in the corresponding destination port. The channel definition field includes a channel start time and a channel length, or a channel start time and a channel end time.

The scheduling control information may be carried in an ODUk data frame or may be statically configured on the data apparatus.

The device for sending and receiving the service data according to the embodiments of the present invention may complete the sending and receiving of the service data in combination with the embodiments of the method for sending and receiving the service data.

Through the device for sending and receiving the service data according to the embodiments of the present invention, the sending end may schedule each flexible data channel to the ODUk frame in the corresponding destination port according to the scheduling control information corresponding to each flexible data channel, and the receiving end may schedule each flexible data channel to the corresponding destination port according to the scheduling control information corresponding to the flexible data channel, so as to recover the service data in the flexible data channel. Since a bandwidth of the flexible data channel is variable, bearing at any rate is implemented, and a flexible and rapid bandwidth adjustment capability is provided.

The above descriptions are merely exemplary embodiments of the present invention, but the protection scope of the present invention is not limited thereto. Any change or replacement readily made by persons skilled in the art within the technical scope disclosed by the present invention should fall within the protection scope of the present invention. Therefore, the protection scope of the present invention shall be subject to the appended claims.

## Claims

1. A method for sending service data, comprising:
receiving at least one flexible data channel to which service data is adapted;
scheduling the at least one flexible data channel to an Optical Channel Data Unit-k (ODUk) frame in a corresponding destination port respectively according to scheduling control information corresponding to the at least one flexible data channel; and
sending the ODUk frame to a destination address through an Optical Transport Network (OTN) line after completing construction of the ODUk frame.

2. The method according to claim 1, wherein a location and a bandwidth of each flexible data channel are determined according to a rate requirement and/or a bandwidth allocation policy of the service data.

3. The method according to claim 1, wherein the scheduling control information comprises:
port information, comprising a source port corresponding to the at least one flexible data channel and a destination port corresponding to the source port; and
channel information, comprising a channel definition field in the source port corresponding to the at least one flexible data channel and a channel definition field in the corresponding destination port, wherein
the channel definition field comprises a channel start time and a channel length, or a channel start time and a channel end time.

4. The method according to claim 3, wherein the channel information further comprises a channel quantity indication field and/or check information, and the channel quantity indication field is used to represent the total number of the flexible data channels.

5. The method according to claim 3, wherein the scheduling the at least one flexible data channel to the ODUk frame in the corresponding destination port respectively according to the scheduling control information corresponding to the at least one flexible data channel specifically comprises:
generating a scheduling control table according to the scheduling control information corresponding to the at least one flexible data channel;
searching for the destination port corresponding to the at least one flexible data channel and for the channel definition field in the corresponding destination port from the scheduling control table; and
scheduling the at least one flexible data channel to the ODUk frame in the corresponding destination port respectively according to information found from the scheduling control table.

6. The method according to claim 3, 4, or 5, wherein the port information and/or the channel information is carried in an Optical Channel Payload Unit-k (OPUk) payload, or
is carried in more than one OPUk sub-frame of an OPUk overhead, or
is encapsulated in a signaling channel of an OPUk overhead, or
is encapsulated in a signaling channel of an Optical Channel Transport Unit k (OTUk) overhead, or
comprises more than one segment, wherein the more than one segment is carried in an OPUk payload of at least one ODUk frame and identified by a frame alignment field in a corresponding OTUk frame alignment overhead.

7. The method according to any one of claims 1 to 5, wherein the scheduling the at least one flexible data channel to the ODUk frame in the corresponding destination port respectively specifically comprises:
scheduling the at least one flexible data channel to an OPUk payload area of the ODUk frame in the corresponding destination port respectively.

8. The method according to any one of claims 1 to 5, wherein if a certain flexible data channel has an error in the process of sending the service data through the OTN line, the certain flexible data channel is filled with an error identifier (ID).

9. A method for receiving service data, comprising:
receiving an Optical Channel Data Unit-k (ODUk) frame that comprises at least one flexible data channel;
scheduling the at least one flexible data channel to a corresponding destination port according to scheduling control information corresponding to the at least one flexible data channel; and
recovering service data in the at least one flexible data channel from the destination port.

10. The method according to claim 9, wherein the scheduling control information comprises:
port information, comprising a source port corresponding to the at least one flexible data channel and a destination port corresponding to the source port; and
channel information, comprising a channel definition field in the source port corresponding to the at least one flexible data channel and a channel definition field in the corresponding destination port, wherein
the channel definition field comprises a channel start time and a channel length, or a channel start time and a channel end time.

11. The method according to claim 10, wherein the scheduling the at least one flexible data channel to the corresponding destination port according to the scheduling control information corresponding to the at least one flexible data channel specifically comprises:
generating a scheduling control table according to the scheduling control information corresponding to the at least one flexible data channel;
searching for the destination port corresponding to the at least one flexible data channel and for the channel definition field in the corresponding destination port from the scheduling control table; and
scheduling the at least one flexible data channel to the corresponding destination port respectively according to information found from the scheduling control table.

12. The method according to claim 10 or 11, wherein the port information and/or the channel information is carried in an Optical Channel Payload Unit-k (OPUk) payload, or
is carried in more than one OPUk sub-frame of an OPUk overhead, or
is encapsulated in a signaling channel of an OPUk overhead, or
is encapsulated in a signaling channel of an Optical Channel Transport Unit k (OTUk) overhead, or
comprises more than one segment, wherein the more than one segment is carried in an OPUk payload of at least one ODUk frame and identified by a frame alignment field in a corresponding OTUk frame alignment overhead.

13. A data apparatus, comprising:
a receiving unit, configured to receive at least one flexible data channel to which service data is adapted;
a scheduling unit, configured to schedule the at least one flexible data channel to an Optical Channel Data Unit-k (ODUk) frame in a corresponding destination port respectively according to scheduling control information corresponding to the at least one flexible data channel; and
a sending unit, configured to send the ODUk frame to a destination address through an Optical Transport Network (OTN) line after completing construction of the ODUk frame.

14. The data apparatus according to claim 13, wherein the scheduling unit comprises:
a control table generation module, configured to generate a scheduling control table according to the scheduling control information corresponding to the at least one the flexible data channel;
a search module, configured to search for the destination port corresponding to the at least one flexible data channel and for a channel definition field in the corresponding destination port from the scheduling control table generated by the control table generation module; and
a channel scheduling module, configured to schedule the at least one flexible data channel to the ODUk frame in the corresponding destination port respectively according to information found by the search module.

15. A data apparatus, comprising:
a receiving unit, configured to receive an Optical Channel Data Unit-k (ODUk) frame that comprises at least one flexible data channel;
a scheduling unit, configured to schedule the at least one flexible data channel to a corresponding destination port according to scheduling control information corresponding to the at least one flexible data channel; and
a recovery unit, configured to recover service data in the at least one flexible data channel from the destination port.

16. The data apparatus according to claim 15, wherein the scheduling unit comprises:
a control table generation module, configured to generate a scheduling control table according to the scheduling control information corresponding to the at least one the flexible data channel;
a search module, configured to search for the destination port corresponding to the at least one flexible data channel and for a channel definition field in the corresponding destination port from the scheduling control table generated by the control table generation module; and
a channel scheduling module, configured to schedule the at least one flexible data channel to the corresponding destination port respectively according to information found by the search module.
